(19) Europäisches Patentamt
European Patent Office
Office européen des brevets

(11) **EP 1 886 809 A1**

(12) **EUROPEAN PATENT APPLICATION**
published in accordance with Art. 153(4) EPC

(43) Date of publication:
**13.02.2008 Bulletin 2008/07**

(51) Int Cl.:
***B32B 27/30*** (2006.01)

(21) Application number: **06746058.4**

(22) Date of filing: **08.05.2006**

(86) International application number:
**PCT/JP2006/309226**

(87) International publication number:
**WO 2006/120989 (16.11.2006 Gazette 2006/46)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.05.2005 JP 2005138860**
**25.05.2005 JP 2005152969**
**17.10.2005 JP 2005302239**

(71) Applicant: **Toyo Boseki Kabushiki Kaisha**
**Osaka-shi, Osaka 530-8230 (JP)**

(72) Inventors:
• **KUWAHARA, Mitsuru,**
**TOYO BOSEKI KABUSHIKI KAISHA**
**Inuyama-shi,**
**Aichi 484-8508 (JP)**

• **NISHI, Tadashi,**
**TOYO BOSEKI KABUSHIKI KAISHA**
**Inuyama-shi,**
**Aichi 484-8508 (JP)**
• **NOSE, Katsuhiko,**
**TOYO BOSEKI KABUSHIKI KAISHA**
**Osaka-shi,**
**Osaka 530-8230 (JP)**

(74) Representative: **Weber, Thomas**
**Patentanwälte**
**Von Kreisler-Selting-Werner**
**Postfach 10 22 41**
**50462 Köln (DE)**

(54) **COATED FILM AND VAPOR-DEPOSITED FILM**

(57)   The present invention provides a coated film having a thickness of 5 - 50 μm, wherein a coating layer containing a melamine series compound and a poly(vinyl alcohol)-based polymer as essential components is laminated on a substrate made of a polymer resin composition, and the weight of formaldehyde and the weight of alcohol developed from the coated film when heated at 130°C is each not more than 50 ppm of the weight of a sample of the coated film, and a vapor-deposited film wherein an inorganic thin film layer is vapor-deposited on the coating layer of the coated film. The present invention also provides a vapor-deposited film with gas barrier property, which is superior in the gas barrier property of oxygen and moisture vapor and has gas barrier property that does not decrease even during bending and a coated film as a substrate of a vapor deposition, which expresses gas barrier property and has a coating layer having uniform property.

EP 1 886 809 A1

**Description**

**Technical Field**

The present invention relates to a coated film or vapor-deposited film with gas barrier property used in the field of packaging for food, pharmaceutical product and the like.

**Background Art**

Packaging materials used for a food, a pharmaceutical product and the like are required to have property to block a gas such as oxygen, moisture vapor and the like so as to 1) suppress oxidation of protein, and fats and oils, 2) retain taste and freshness, and 3) maintain efficacy of pharmaceutical products, namely, gas barrier property.

For this end, a film wherein a polymer resin composition generally said to have comparatively high gas barrier property such as poly(vinyl alcohol) (hereinafter PVA), ethylene-vinyl alcohol copolymer (EVOH), polyvinylidene chloride resin (hereinafter PVDC) and the like is laminated has been conventionally used as a packaging material. In addition, a film made of a suitable polymer resin composition (even a resin without high gas barrier property by itself) which is vapor-deposited with a metal such as Al and the like, or vapor-deposited with inorganic oxide such as alumina, silica and the like has gradually been used in general as a packaging material.

However, since a laminate film with gas barrier property, which is made of the aforementioned PVA-based, or EVOH-based polymer resin composition, has high temperature dependency and high humidity dependency, it shows lower gas barrier property at a high temperature or under high humidity. In other words, a boiling treatment or retort treatment markedly degrades the gas barrier property. In addition, while a laminate film with gas barrier property, which is made of a PVDC-based polymer resin composition, has low humidity dependency of the gas barrier property, it is difficult to realize high gas barrier property as shown by the oxygen barrier property of not more than 10 ml/m$^2$·day·MPa. Moreover, since the coated film contains a large amount of chlorine, problems occur with regard to the waste treatment such as incineration disposal, recycling and the like.

Furthermore, the aforementioned film vapor-deposited with a metal or vapor-deposited with inorganic oxide such as alumina, silica and the like lacks flexibility of the thin film of an inorganic material which is used for a gas barrier layer and fragile to crumpling and bending because the vapor-deposited material and the resin film are considerably different in the properties such as mechanical property, chemical property, thermal property and the like. Due to poor adhesion to the substrate, careful handling is required and particularly, problems occur in that crack is developed and the gas barrier property is markedly degraded during subsequent processing of the packaging material such as printing, laminating, bag-making and the like. Furthermore, since a vacuum process is used for the formation, sometimes the apparatus may be expensive, a substrate may be damaged due to a local high temperature in the formation step, and a defect, pinhole and the like may be developed in the vapor-deposited layer due to decomposition of a low molecular weight portion or additive such as plasticizer and the like, degassing and the like. That is, the conventional vapor-deposited films have problems in that they fail to achieve high gas barrier property and require high costs.

In patent reference 1, a gas barrier material having a substrate and a metal alkoxide coating formed thereon has been proposed to solve the above-mentioned problem. Since this gas barrier material has a certain degree of flexibility and permits production by a liquid phase coating method, it renders the cost economical. In practice, however, the above-mentioned gas barrier material shows gas barrier property somewhat improved as compared to a single substrate but is still insufficient, and high gas barrier property has not been realized.
patent reference 1: JP-A-62-295931

**Disclosure of the Invention**

**Problems to be Solved by the Invention**

The present invention aims at providing a vapor-deposited film with gas barrier property, which is superior in the gas barrier property of oxygen and moisture vapor and has gas barrier property that does not decrease even during bending. In addition, the present invention aims at providing a coated film as a substrate of a vapor deposition, which expresses gas barrier property and has a coating layer having uniform property.

**Means of Solving the Problems**

Of the present invention, the constitution of the first invention is a coated film having a thickness of 5 - 50 $\mu$m, wherein a coating layer comprising a melamine series compound and a poly(vinyl alcohol)-based polymer as essential components is laminated on a substrate made of a polymer resin composition, and the weight of formaldehyde and the weight of alcohol developed from the coated film when heated at 130°C is each not more than 50 ppm of the weight of a sample of the coated film.

The constitution of the second invention is a vapor-deposited film wherein an inorganic thin film layer is vapor-deposited on the coating layer of the coated film of the first invention.

The constitution of the third invention is a vapor-deposited film of the second invention which shows, when the vapor-deposited film is subjected to a gelbo test, the oxygen permeability and moisture vapor permeability before and after the gelbo test satisfy the following formula 1): formula 1) (permeability after gelbo test - permeability before gelbo test)/permeability before gelbo test≤0.2.

**Effect of the Invention**

According to the present invention, a film superior in the oxygen barrier property, moisture vapor barrier property, and uniformity of these barrier properties, which shows less degradation of barrier property against an external force such as bending and the like, is free of dioxin and hydrogen chloride gas in an incineration exhaust gas, and is effective for conservation of the environment can be provided economically.

**Best Mode for Embodying the Invention**

The embodiment of the coated film and vapor-deposited film of the present invention is explained in the following.

[Substrate layer]

The substrate layer to be used in the present invention is a film obtained, for example, by melt-extruding an organic polymer and, where necessary, stretching in the longitudinal direction and/or the transverse direction, cooling and heat fixing, wherein examples of the organic polymer include polyamide represented by nylon 4,6, nylon 6, nylon 6,6, nylon 12 and the like, polyester represented by poly(ethylene terephthalate), poly(butylene terephthalate), polyethylene-2,6-naphthalate and the like, polyolefin represented by polyethylene, polypropylene, polybutene and the like, as well as poly(vinyl chloride), polyvinylidene chloride, poly(vinyl alcohol), totally aromatic polyamide, polyamideimide, polyimide, polyetherimide, polysulfone, polystyrene, poly(lactic acid) and the like.
The substrate layer in the present invention may be a laminate film. When a laminate film is to be produced, the kind of laminate, number of lamination, lamination method and the like are not particularly limited, and can be optionally selected from known methods according to the object.

[Coating layer]

A particular coating layer is laminated on at least one surface of such substrate layer. The coating layer comprises a melamine series compound and a poly(vinyl alcohol)-based polymer as essential components.
In the melamine series compound to be used in the present invention, at least a part of hydrogen atoms of the three amino groups bonded to the triazine ring is substituted by a methylol group, wherein the number of the methylol group is generally 3 - 6, and a part or the entirety of the methylol group is alkyletherified. The alkyl moiety of the alkyletherified melamine series compound is a linear or branched chain having 1 to 6, preferably 1 - 3, carbon atoms. For example, it is methyl, ethyl, n- or iso-propyl, n-, iso-or tert-butyl and the like. Specific examples of the melamine series compound to be used in the present invention include hexamethylolmelamine hexamethylether, hexamethylolmelamine pentamethylether, hexamethylolmelamine tetramethylether, pentamethylolmelamine pentamethylether, pentamethylolmelamine tetramethylether, pentamethylolmelamine trimethylether, tetramethylolmelamine tetramethylether, tetramethylolmelamine trimethylether, trimethylolmelamine trimethylether, trimethylolmelamine dimethylether and the like, with preference given to trimethylolmelamine trimethylether and trimethylolmelamine dimethylether from the aspect of compatibility with poly(vinyl alcohol)-based polymer. The melamine series compound may partly contain a condensation product such as dimer and the like.

On the other hand, the degree of polymerization and the degree of saponification as to poly(vinyl alcohol)-based polymer are determined based on the object gas barrier property, viscosity of a coating aqueous solution and the like. When the degree of polymerization becomes high, the aqueous solution viscosity becomes high, rendering coating difficult. Thus, the degree of polymerization is preferably not more than 2600 in view of the coating workability. As to the degree of saponification, when it is less than 90%, sufficient oxygen gas barrier property cannot be obtained under high humidity and when it exceeds 99.7%, the aqueous solution cannot be easily controlled and is frequently gelled, which is unsuitable for industrial production. Accordingly, the degree of saponification is preferably 90 - 99.7%, more preferably 93 - 99%. Other various copolymerized or denatured poly(vinyl alcohol)-based polymers such as silanol group-containing poly(vinyl alcohol)-based polymer and the like can be freely used in combination as long as they do not inhibit the object transparency and gas barrier property.

In the present invention, the weight ratio of melamine series compound/poly(vinyl alcohol)-based polymer can be freely selected. It is preferably 25/75 - 90/10, more preferably 30/70 - 90/10, particularly preferably 50/50 - 80/20, from the aspect of gas barrier property. When the ratio is smaller than 25/70 or greater than 90/10, the object oxygen barrier property and moisture vapor barrier property cannot be sufficiently expressed.

The coating layer in the present invention preferably contains a polyalkylene glycol-based surfactant in a proportion of 0.01 - 5 wt% relative to the poly(vinyl alcohol)-based polymer. By mixing a polyalkylene glycol-based surfactant, a film with less coating defect can be obtained and the gas barrier property is also improved. When the mixing amount of the polyalkylene glycol-based surfactant is less than 0.01 wt%, the wettability to the substrate film becomes insufficient, and the film comes to have many coating defects. On the other hand, when the mixing amount of the polyalkylene glycol-based surfactant exceeds 5 wt%, adverse effects are produced in that the hydrophilicity of the coating layer becomes high and the oxygen barrier property under high humidity is degraded.

Examples of such polyalkylene glycol-based surfactant include higher alcohol-ethylene oxide adduct, alkylphenol-ethylene oxide adduct, fatty acid-ethylene oxide adduct, polyvalent alcohol fatty acid ester-ethylene oxide adduct, higher alkylamine-ethylene oxide adduct, fatty acid amide-ethylene oxide adduct, fats and oils-ethylene oxide adduct, polypropylene glycol-ethylene oxide adduct and the like. Of these, higher alcohol-ethylene oxide adduct, alkylphenol-ethylene oxide adduct and polypropylene glycol-ethylene oxide adduct are preferable since they do not degrade the oxygen gas barrier property. While HLB (Hydrophile-Lipophile Balance) is often used as an index showing hydrophilicity thereof, HLB is preferably 10 - 17 from the aspects of compatibility with poly(vinyl alcohol)-based resin and film forming property.

The water contact angle of a coating layer comprising the melamine series compound and poly(vinyl alcohol)-based polymer as an essential component is preferable not less than 30 degrees from the aspect of the expression of moisture vapor barrier property after inorganic thin film layer vapor-deposition. When the water contact angle of the poly(vinyl alcohol)-based polymer is less than 30 degrees, sufficient moisture vapor barrier property cannot be achieved. As a method for increasing the water contact angle, increasing the reaction temperature of the melamine series compound and the poly(vinyl alcohol)-based polymer is effective.

A coating layer comprising a melamine series compound wherein a part or the entirety of the methylol group is alkyletherified and a poly(vinyl alcohol)-based polymer as an essential component to be used in the present invention can be generally formed by coating using a solvent. As the solvent in the coating solution, 100% water or a mixed solvent of water/lower alcohol is preferably used in view of solubility. The lower alcohol is an alcoholic compound having a straight chain or branched chain aliphatic group having 1 to 3 carbon atoms. Specific examples thereof include methyl alcohol, ethyl alcohol, ethylene glycol, and n- or iso-propyl alcohol. Particularly, iso-propyl alcohol is preferable. The total solid content concentration of the coating solution of the present invention is 2 - 35 wt%, generally preferably 5 - 30 wt%.

While the order of addition of the coating solution materials is not particularly limited, from the aspect of miscibility of the raw materials, a method including addition and agitation in the order of the above-mentioned solvent, poly(vinyl alcohol)-based polymer, melamine series compound and additive (e.g., catalyst and the like) is preferable. For mixing raw materials for the above coating solution, the poly(vinyl alcohol)-based polymer and melamine series compound are preferably used in the form of a solution obtained by dissolving them in the above-mentioned solvents.

Where further necessary, addition of known inorganic or organic various additives (e.g., antistatic agent, slip agent, antiblocking agent and the like) to the coating layer is optional as long as it does not inhibit the object of the present invention.

In this way, a coating layer comprising a melamine series compound and a poly(vinyl alcohol)-based polymer as essential components can be formed on the substrate. As a method for forming a coating layer on a substrate, a method including coating the substrate with an aqueous solution is generally employed as mentioned above. While the coating method is not limited, it is determined in view of the coating amount and viscosity of the coating solution to be used. It can be selected from fountain bar coating method, fountain reverse roll coating method, die coating method and the like.

The thickness of the coating layer in the present invention is preferably 0.05 - 0.50 $\mu$m, particularly preferably 0.10 - 0.30 $\mu$m, in view of the gas barrier property and economical aspects. When the thickness of the coating layer is less than 0.05 $\mu$m, the oxygen barrier property and moisture vapor barrier property are not sufficiently expressed. On the other hand, when the thickness of the coating layer exceeds 0.50 $\mu$m, the formaldehyde and lower alcohol components in the film increase. As a result, not only the gas barrier property is degraded but also the production cost increases, thus leading to poor economic aspect.

While the conditions of drying and heat treatment during coating vary depending on the coat thickness and conditions of the apparatus, it is preferable to feed the film to the stretching process in the perpendicular direction immediately after the coating and drying the film in the preheating zone of the stretching process or in the stretching zone. In this case, the process is generally performed at about 50 - 250°C. Where necessary, before forming an oxygen gas barrier layer, the substrate film may be subjected to a corona discharge treatment, or other surface activating treatment or anchor treatment using a known anchoring agent.

[Inorganic thin film vapor-deposited layer]

An inorganic thin film layer is vapor-deposited on the above-mentioned coating layer. The inorganic thin film layer improves the gas barrier property. Examples of the material of the inorganic thin film include metals such as Al, Si, Ti, Zn, Zr, Mg, Sn, Cu, Fe and the like, oxide, nitride, fluoride, sulfide and the like of these metals, and specifically include SiOx (x=1.0 - 2.0), alumina, magnesia, zinc sulfide, titania, zirconia, cerium oxide and a mixture thereof. The inorganic thin film layer may a single layer or a laminate of two or more layers.

The film thickness of the above-mentioned inorganic thin film layer is preferably 10 - 5000Å, more preferably 50 - 2000Å. When the film thickness is less than 10Å, unpreferably, sufficient gas barrier property may not be afforded. Conversely, when it exceeds 5000Å, unpreferably, an effect corresponding thereto is not provided, the bending resistance decreases and the production cost becomes disadvantageous.

As the vapor deposition method of the above-mentioned inorganic thin film layer, a known method, for example, physical vapor deposition methods such as vacuum vapor deposition method, sputtering method, ion plating method and the like, chemical vapor deposition methods such as PECVD and the like, and the like is employed.

In the vacuum vapor deposition method, as a material for vapor deposition, a metal such as aluminum, silicon, titanium, magnesium, zirconium, cerium, zinc and the like, a compound such as SiOx(x=1.0 - 2.0), alumina, magnesia, zinc sulfide, titania, zirconia and the like, and a mixture thereof are used. As the heating method, resistance heating, induction heating, electron beam heating and the like are employed. As a reaction gas, oxygen, nitrogen, hydrogen, argon, carbon gas, moisture vapor and the like may be introduced, or a reactive vapor deposition method using the means of ozone addition, ion assisted deposition and the like may be employed. Furthermore, a method such as application of bias on the substrate, heating, cooling and the like may be employed. The above-mentioned materials for vapor deposition, reaction gas, bias application and heating and cooling can also be employed in the sputtering method and the CVD method.

The thickness of the coated film and vapor-deposited film of the present invention needs to be 5 - 50 $\mu$m because it is generally used as a packaging material. Desirably, the thickness of the coated film and vapor-deposited film is 10 - 30 $\mu$m.

The amounts of formaldehyde and alcohol developed when such coated film and vapor-deposited film are heated at 130°C are each not more than 50 ppm of the weight of the sample film. Examples of alcohol developed during heating include lower alcohol such as methyl alcohol, ethyl alcohol, ethylene glycol, n- or iso-propyl alcohol, n-, iso- or tert-butyl alcohol and the like. When the amount of formaldehyde or alcohol exceeds 50 ppm, a dense vapor deposition coat cannot be obtained, and sufficient gas barrier property cannot be afforded. The amount of formaldehyde developed is preferably not more than 40 ppm of the weight of the sample film, particularly preferably not more than 30 ppm. The amount of alcohol developed is preferably not more than 30 ppm, particularly preferably not more than 20 ppm, of the weight of the sample film.

In addition, the amount of formaldehyde developed is not more than 200 ppm and the total amount of alcohol developed is not more than 200 ppm when such a coated film or vapor-deposited film is heated at 200°C. When the amount of formaldehyde or alcohol exceeds 200 ppm, a dense vapor deposition coat cannot be obtained and sufficient gas barrier property cannot be achieved.

Since such formaldehyde or alcohol is developed due to decomposition or self-condensation reaction of melamine compound, or condensation reaction of melamine compound and poly(vinyl alcohol)-based polymer, a temperature increase causes a striking increase in the amount developed. Accordingly, even when a retort treatment is performed at the highest (around 130°C) of the temperature generally employed, the total formaldehyde or alcohol amount becomes still less; in practical embodiment of use, since an adhesive layer, sealant and the like are laminated on a coated film, the product developed during heating becomes formaldehyde-free and alcohol-free.

A film with gas barrier property thus produced is highly superior in the oxygen barrier property and moisture vapor barrier property. The oxygen permeability is not more than 10 ml/m$^2$·day·MPa, and the moisture vapor permeability is not more than 2 g/m$^2$·day. One major characteristic of the film with gas barrier property of the present invention is smaller degradation of the barrier property upon application of an external force such as bending and the like, which is achieved by the presence of a particular coating layer laminated between an inorganic thin film layer and a substrate layer. An example thereof is, in a conventional gelbo treatment test, a small change in the gas permeability after the gelbo test and the permeability increase rate of less than 20% for both oxygen and moisture vapor.

In addition, as for a vapor-deposited film, when subjected to a gelbo test, the oxygen permeability and moisture vapor permeability thereof before and after the gelbo test preferably satisfy the following formula 1):

$$\text{formula 1) (permeability after gelbo test - permeability}$$

$$\text{before gelbo test)/permeability before gelbo test} \le 0.2$$

A film satisfying the relationship of the formula 1) is superior in the bending resistance and is useful. In addition, the ratio shown by (permeability after gelbo test - permeability before gelbo test)/permeability before gelbo test is preferably not more than 0.15, particularly preferably not more than 0.10.

In the gelbo test, a polyurethane-based adhesive is first applied in about 3 μm onto a vapor-deposited surface of a vapor-deposited film, heat treated at 80°C, and a low density polyethylene film is dry laminated at a nip pressure of 490 kPa on a metal roll heated to 80°C to give a laminate film to be a gelbo test sample. The gelbo test sample is subjected to a 50-time twisting treatment using a gelbo flex tester under the conditions of 20°C, 65% RH, and 50 times twisting/l min. The thus-produced sample after gelbo test and the sample (laminate film) before gelbo test are measured for the oxygen permeability and moisture vapor permeability.

A preferable production method for obtaining the coated film of the present invention is now explained. The present inventors have considered the gas barrier property and uniformity thereof, which are the main objects of the present invention, and found that the coating layer is primarily important, and the properties are greatly influenced by the uniformity, coating property and the amount of volatile components thereof. That is, they have found that a film having high gas barrier property and superior uniformity can be obtained by employing the following means.

1) Composition of coating solution to form coating layer

    a) addition of compatible polymer
    b) use of temperature-dependent catalyst system

2) Coating and drying process

    a) emission rate and temperature of drying zone (tenter)
    b) moisture content of coating layer before stretching
    c) rotation direction of bar controlling coating thickness

1)-a) Addition of compatible polymer

In the production of the coated film of the present invention, a coating layer made of a melamine series compound/poly(vinyl alcohol)-based polymer easily takes a phase separation structure, and the coating layer tends to be nonuniform. As a result, the gas barrier property partially decreases after inorganic thin film vapor deposition, and the gas barrier property varies greatly. Moreover, when the coating layer takes a phase separation structure, the amount of an unreacted alkyletherified melamine series compound increases. As a result, the components of formaldehyde and lower alcohol tend to remain easily, and the gas barrier property after inorganic thin film vapor deposition is degraded.

As a method of solving these problems, it is important to increase the compatibility of the coating layer. Accordingly, the present invention uses a compatible polymer. Here, the compatible polymer means a polymer having a function to enhance the compatibility between a melamine series compound and a poly(vinyl alcohol)-based polymer to be used. Containing a compatible polymer, the compatibility of the coating layer is enhanced, which not only improves the transparency of the coating film, but also confers stretchability to the coating film when it is to be stretched. Consequently, the uniformity of the coating film is ensured, and uniform barrier property can be achieved while maintaining the high barrier property of the present invention. Furthermore, containing a compatible polymer, the reactivity of the coating solution decreases and the viscosity stability of the coating solution is improved.

Examples of the compatible polymer include poly(vinyl alcohol)-based polymer containing an ethylene component; cellulose derivatives such as carboxymethylcellulose, hydroxyethylcellulose and the like; starches such as oxidized starch, etherified starch, dextrin and the like; polyalcohol obtained by reducing polyketone made of carbon monoxide-ethylene-based copolymer; polyvinylpyrrolidone; polyalkylene glycol such as poly(ethylene glycol) and the like; (meth)acrylic acid-based polymers such as poly(meth)acrylic acid, poly(meth)acrylic acid ester, poly(meth)acrylic acid salt, or a copolymer comprising (meth)acrylic acid, (meth)acrylic acid ester, (meth)acrylic acid salt and the like as monomer components, and the like; copolymerized polyester containing a polar group such as sulfoisophthalic acid, etc. and the like. Of these, preferred are poly(vinyl alcohol)-based polymer containing an ethylene component and hydroxyethylcellulose.

The poly(vinyl alcohol) polymer containing ethylene component is a polymer wherein ethylene and vinyl alcohol are copolymerized in the chemical structural formula. In fact, monomer units such as ethylene component, vinyl alcohol component, vinyl acetate component and the like are contained in the polymer since the polymer is produced from ethylene and vinyl acetate. The amount of the ethylene component in the polymer is preferably 1 - 50 mol%, and further preferably 2 - 10 mol%. When the amount of ethylene component is less than 1 mol%, the compatibility of the aforementioned coating layer becomes poor and the coating layer becomes opaque. When the amount exceeds 50 mol%, solubility in a coating solvent becomes poor and processability is degraded.

The amount of the compatible polymer to be used in the present invention is, when the total amount of poly (vinyl alcohol)-based polymer and compatible polymer is 100 wt%, preferably not less than 1 wt% and not more than 95 wt%, more preferably not less than 3 wt% and not more than 70 wt%, particularly preferably not less than 3 wt% and not more than 50 wt%, further particularly preferably not less than 3 wt% and not more than 35 wt%, most preferably not less than 3 wt% and not more than 20 wt%. When the amount of the compatible polymer to be used is less than 1 wt%, transparency becomes low due to the poor compatibility of the components of the coating film. In the case of coating during film forming and stretching, the coating film is easily broken. In addition, the amount of unreacted melamine series compound increases, and the components of formaldehyde and lower alcohol tend to easily remain. As a result, the gas barrier property, which is the object of the present invention, tends to show phenomena of degradation and nonuniformity. When the amount of the compatible polymer to be used exceeds 95 wt%, the film forming property of the compatible polymer itself is adversely influenced, and the transparency is degraded.

However, when poly(vinyl alcohol) polymer containing ethylene component is used as a compatible polymer, the amount of the compatible polymer to be used is not less than 1 wt% and not more than 90 wt%, more preferably not less than 1 wt% and not more than 50 wt%, when the total amount of poly(vinyl alcohol)-based polymer and poly(vinyl alcohol) polymer containing ethylene component is 100 wt%. The reason for the limited range of amounts to be used is similar to the above-mentioned.

In addition, when poly(vinyl alcohol) polymer containing ethylene component is used as the compatible polymer, the poly(vinyl alcohol) polymer containing ethylene component is considered to be included in the poly(vinyl alcohol)-based polymer. To be specific, for example, for calculation of the amounts of the melamine compound, temperature-dependent catalyst to be used and the like, the total amount of poly(vinyl alcohol) polymer containing ethylene component and poly (vinyl alcohol)-based polymer is considered to be the base amount.

1)-b) Use of temperature-dependent catalyst system

In the production of the coated film of the present invention, a condensation reaction proceeds both in a coating solution to form a coating layer of melamine series compound and poly(vinyl alcohol)-based polymer, and a drying zone. When the reaction proceeds too much in the coating solution, the coating solution becomes clouded, and the viscosity becomes high. As a result, not only the transparency of the obtained coating film becomes low, but also the coat thickness varies, giving rise to a phenomenon of insufficient and nonuniform gas barrier property after inorganic thin film vapor deposition. On the other hand, when the reaction proceeds poorly in the drying zone, moisture vapor barrier property, which is one of the object gas barrier properties, cannot be expressed because the hydrophilicity of the coating film is high. That is, a simple control of the reaction is difficult to afford sufficient and uniform gas barrier property.

Accordingly, to solve this antinomic problem, it is considered necessary to lower the reactivity of the coating solution and enhance the reactivity of the coating layer (dry coating film). As a result of the intensive study of the means therefor, it has been found that the use of a catalyst showing high temperature dependency of the catalyst activity (in the present invention, this is to be referred to as temperature-dependent catalyst) is effective. That is, using such catalyst, the difference between the reactivity of the coating solution and the reactivity of the coating layer increases, thereby realizing low reactivity in the coating solution and high reactivity in the drying zone, which can afford sufficient and uniform gas barrier property.

The temperature-dependent catalyst is not limited as to the kind thereof as long as it shows low catalyst activity at the temperature at which a coating solution is handled, and remarkable catalyst activity at the temperature of the drying zone. Specific examples include acid/volatile amine catalyst; inorganic metal salts such as aluminum chloride, aluminum nitrate, aluminum sulfate, zinc chloride, zinc nitrate, zinc borofluoride, magnesium chloride, magnesium borofluoride and the like; inorganic acids such as hydrochloric acid, sulfuric acid, phosphoric acid and the like; organic acids such as benzenesulfonic acid, naphthalenesulfonic acid, acetic acid, lactic acid, tartaric acid, citric acid, glycolic acid, etc. and the like. Of these, acid/volatile amine catalyst and magnesium chloride are preferable.

As the acid/volatile amine catalyst, a potential one that becomes acidic by dissociating amine or ammonium, such as amine salt and ammonium salt of a compound containing an acidic group such as carboxyl group, sulfonic acid group and the like, and the like can be used. Examples thereof include amine salt and ammonium salt of benzenesulfonic acid, amine salt and ammonium salt of naphthalenesulfonic acid derivative, amine salt and ammonium salt of phosphoric acid and the like. Specific examples thereof include amine salt and ammonium salt of dodecylbenzenesulfonic acid, amine salt and ammonium salt of dinonylnaphthalenesulfonic acid, amine salt and ammonium salt of p-toluenesulfonic acid, amine salt of phosphoric acid, ammonium dihydrogenphosphate, ammonium monohydrogenphosphate, Catalyst 500 (manufactured by Mitsui Cyanamide Co.), Catalyst 600 (same), Catalyst 4040 (same) and the like. While the ratio of acid and volatile amine varies depending on the kind of the catalyst, 0.1 - 2.0 equivalents of volatile amine is generally added to an acid.

While the amount of the temperature-dependent catalyst to be added varies depending on the kind of the catalyst, it is generally added in 0.1 - 10 wt% relative to the total solid content of melamine series compound and poly (vinyl alcohol)-based polymer.

In the present invention, a coated film having a uniform thickness and uniform superior gas barrier property is obtained only by a synergistic effect provided by a combined use of the temperature-dependent catalyst and the compatible polymer of the above-mentioned 1)-a). The reason therefor is assumed to be as follows. Addition of the temperature-dependent catalyst can increase the difference between the reactivity of a coating solution and the reactivity of a coating layer. When the amount of the temperature-dependent catalyst added increases, the reactivity of the coating solution tends to increase and the viscosity stability of the coating solution tends to decrease. On the other hand, a compatible polymer decreases the reactivity of a coating solution (improves the viscosity stability of the coating solution), and further, increases the compatibility of the coating layer, and consequently improves the reactivity of the coating layer. Therefore, it is considered that, using a compatible polymer with a temperature-dependent catalyst in combination, the amount of the temperature-dependent catalyst to be added can be suppressed, and the balance between the reactivity of the coating solution and the reactivity of the coating layer can be controlled appropriately.

2)-a) Emission rate and temperature of drying zone (tenter)

In the production of the coated film of the present invention, emission rate and temperature of the drying zone are important for the expression and uniformity of the gas barrier property. Increasing the emission rate of the drying zone, a volatile component in the coating film decreases and the gas barrier property is expressed. That is, when the emission rate of the drying zone is low, more volatile components such as formaldehyde, lower alcohol and the like due to unreacted melamine remain in the coating film and the inorganic thin film to be vapor-deposited thereon does not become dense. As a result, sufficient gas barrier property cannot be provided. On the other hand, when the emission rate of the drying zone is high, uneven reaction of melamine series compound/poly(vinyl alcohol)-based polymer tends to occur due to inconsistent temperatures in the drying zone, and the gas barrier property tends to be nonuniform.

Thus, as a result of the study of a means of solving these problems, it has been found that sufficient and uniform gas barrier property can be obtained by a combined use of a means to raise the temperature of the drying zone. However, when the temperature is too high, adverse effects occur such as great temperature variation in the film flow direction, decreased strength of the substrate and the like. Therefore, appropriate temperature setting is important.

That is, it has been found that such adverse effects can be avoided, gas barrier property can be expressed and uniformity thereof can be realized by setting the emission rate and temperature of the drying zone to the following and performing an accurate control.

1) emission rate of drying zone ($m^3$/min)=thickness of coating layer ($\mu$m)×melamine amount (%) in the coating layer×coefficient a (a: 40 - 70)
2) maximum temperature of drying zone (heat fixation temperature): 220 - 235°C

In addition, as a method of decreasing the temperature variation, use of air speed variation suppressive facility equipped with an inverter, or facility capable of suppressing temperature variation of the hot air blown against the film, using a low pressure vapor of 500 KPa or less as a heat source, and the like, is also effective. Using such method, particularly using these methods in combination, the level and uniformity of the gas barrier property can be further increased.

2)-b) Moisture content of coating layer before stretching

For a system for coating during film forming, moisture content of a coating layer before stretching is important from the aspect of spreadability of the coating layer. By controlling to appropriate moisture content, a coating layer capable of achieving sufficient and uniform gas barrier property can be formed. As a solution to be coated, an aqueous solvent is used as mentioned above, and the moisture of the solvent evaporates in the drying zone. Thereafter, the coating layer formed thereby is stretched with a substrate. Here, too low a moisture content immediately before stretching results in too high a temperature of the coating layer, which excessively promotes the reaction of melamine series compound and poly(vinyl alcohol)-based polymer. As a result, the spreadability of the coating layer becomes poor, and a uniform coating layer cannot be obtained. On the other hand, too high a moisture content immediately before stretching results in too low a temperature of the substrate, which renders stable stretching of the substrate unattainable. An appropriate moisture content in coating layer affording uniform coating layer and stable stretching of substrate is 0.5 - 2.0 wt%. While control of the moisture content varies depending on the coat thickness, it is generally possible by setting the temperature of preheating zone in the drying zone, wind speed, passage time, zone length and temperature, and a setting pattern of wind speed in the flow direction. To afford a uniform coating layer, gradual drying is important, where gradual increase of both the temperature and wind speed in the flow direction after coating is effective.

2)-c) Rotational direction of bar controlling coat thickness

As a method for forming the coating layer of the coated film of the present invention, a method including scraping off a coating solution with a bar to control the coat thickness is often used since it can be performed with economical facility. The method was examined and it has been clarified that a bar is appropriately rotated and the rotational direction thereof is extremely important for the uniformity of the coat. That is, for uniform coating, it has been found that the same coating performance as that of roll coating capable of uniform coating can be realized by rotating the bar in the same direction as the traveling direction of the film (rotation in the same direction at the coating part, i.e., positive rotation). The rotational speed is preferably 1/500 - 1/50 of the running speed of the film. When it is less than 1/500 of the running speed, coating streak tends to show. When it exceeds 1/50, variation in the coat thickness increases, and the gas barrier property after inorganic thin film vapor deposition becomes nonuniform.

It is not that any particular one of the above-mentioned means 1)-a)b), 2)-a)b)c) effectively contributes to the expression and uniformity of the gas barrier property of the film, but rather, a combined use of these methods can realize sufficient and uniform gas barrier property very efficiently.

In the production of the coated film of the present invention, the production conditions other than those mentioned above may be optimal conditions appropriately selected from the conventional production conditions of coated films.

As for the production method of the vapor-deposited film of the present invention, a coated film obtained by the aforementioned production method is vapor-deposited according to the aforementioned vapor deposition method.

Since the coated film and vapor-deposited film of the present invention are generally used as packaging materials, a heat-sealable resin layer called sealant is mostly formed on an inorganic thin film layer. The heat-sealable resin layer is generally formed according to the extrusion lamination method or dry lamination method. A thermoplastic polymer forming a heat-sealable resin layer may be any as long as the sealant adhesiveness can be sufficiently expressed, and polyethylene resins such as HDPE, LDPE, LLDPE and the like, PP resin, ethylene-vinyl acetate copolymer, ethylene-$\alpha$-olefin random copolymer, ionomer resin and the like can be used.

**Examples**

The present invention is explained in detail in the following by referring to Examples. The properties of the film obtained in each Example were measured and evaluated according to the following methods.

1) Formaldehyde content

A film sample (1 g) stood for 3 hr under the conditions of 25°C, and 65% RH was heated at 200°C for 15 min. The developed gas was derivatized using a DNPH (2,4-dinitrophenylhydrazine) cartridge under the air (1 L/min) and collected. The collected formaldehyde derivative was quantified by high performance liquid chromatography and the value was converted to a formaldehyde content.

In addition, a film sample (1 g) stood for 3 hr under the conditions of 25°C, and 65% RH was heated at 130°C for 3 min, and the developed gas was collected using a DNPH (2,4-dinitrophenylhydrazine) cartridge under the air (1 L/min). The collected formaldehyde derivative was quantified by high performance liquid chromatography and the value was converted to a formaldehyde content.

2) Alcohol content

A film sample (about 10 mg) stood for 3 hr under the conditions of 25°C, and 65% RH was measured by a glass insert method gas chromatography (manufactured by SHIMADZU CORPORATION, GC-9A). The developed gas collected at an inlet temperature of 200°C for 5 min was quantified for $C_{1-4}$ lower alcohol (methyl alcohol, ethyl alcohol, propyl alcohol, and butyl alcohol).

In addition, a film sample (about 10 mg) stood for 3 hr under the conditions of 25°C, and 65% RH was measured by a glass insert method gas chromatography (manufactured by SHIMADZU CORPORATION, GC-9A). The developed gas collected at an inlet temperature of 130°C for 3 min was quantified for lower alcohol (methyl alcohol, ethyl alcohol, propyl alcohol, and butyl alcohol).

3) Coat thickness, number of measurement points

The coat thickness was measured by observation under a transmission electron microscope. A film sample was embedded in epoxy resin and an ultrathin section was produced at room temperature. This was stood for 3 min in $RuO_4$ vapor, and carbon was vapor-deposited thereon to give a sample for observation. The sample was observed and photographed with a transmission electron microscope (manufactured by JEOL Ltd., JEM2010) at an acceleration voltage (200 KV) and direct 50000-magnification. As for each sample cut out from each section, a coat thickness was measured at five points equally dividing the length along the film width direction (i.e., when the film width of the sample is 0.4 m, the thickness at 0.08 m, 0.16 m, 0.24 m, 0.32 m and 0.4 m in the transverse direction was measured), and the average value thereof was taken as the coat thickness of each sample. From the coat thickness of each sample, an average coat thickness of the coated film was determined.

When a methylolmelamine compound was used as the melamine series compound, the coat thickness can be measured utilizing the C=N absorption band of IR of the melamine compound. The IR absorbance ratio was measured, the coat thickness was determined using the following calculation formula obtained from the correlation between ATR-IR absorbance ratio and thickness by the transmission electron microscope, and it was confirmed that the coat thickness was the same as the above. coat thickness ($\mu$m)=A1540 cm$^{-1}$ (absorbance of melamine)/A1340 cm$^{-1} \times 0.15$

4) Water contact angle

The coated surface of the film stood for 3 hr under the conditions of 25°C, and 65% RH was measured using a contact angle meter (DropMaster 500, manufactured by Kyowa Interface Science Co., Ltd.) As the water, ion-exchange water was used. The value at 10 min after dropping the water drop of ion-exchange water was measured.

5) Oxygen barrier property

The oxygen permeability of the produced film was measured with an oxygen permeability measurement apparatus (manufactured by Modern Control Co., OX-TRAN100) after temperature and humidity adjustment under the conditions of 23°C, and 85% RH for 3 hr.

6) Moisture vapor barrier property

The moisture vapor permeability of the produced film was measured with a measuring apparatus (PARMATRAN-W) manufactured by MOCON Inc., USA, after temperature and humidity adjustment under the conditions of 40°C, and 90% RH for 3 hr.

**Experimental Example 1**

[Preparation of coating solution]

While stirring water (39.6 kg), non-denatured poly(vinyl alcohol) polymer (degree of saponification 98.5 mol%, degree of polymerization 500, 4.86 kg), and poly(vinyl alcohol) polymer containing ethylene component EXCEVAL (registered trade mark) RS-4105 (manufactured by KURARAY CO., LTD., ethylene content 5 mol%, degree of saponification 98.5 mol%, degree of polymerization 500, 0.54 kg) were gradually added. The mixture was heated to 90°C, and poly(vinyl alcohol) polymer was completely dissolved. Thereafter, the mixture was cooled to 25°C, and 12% aqueous solution of poly(vinyl alcohol) polymer was prepared. The aqueous poly(vinyl alcohol) polymer solution (45 kg), melamine series compound Cymel 327 (manufactured by Mitsui Cytec Co., 77% solution, 16.4 kg), water (31.6 kg), isopropyl alcohol (7.0 kg), 20% aqueous phosphoric acid solution (1.8 kg), 20% aqueous monoethanolamine solution (1.12 kg) (phosphoric acid was 2% relative to total solid content of poly(vinyl alcohol) polymer and melamine series compound, and monoethanolamine was 1/3 equivalent of phosphoric acid), and polyalkylene glycol-based surfactant (NOIGEN EA110, 0.018 kg, manufactured by DAI-ICHI KOGYO SEIYAKU CO., LTD., HLB11, 0.1% relative to coating layer) were mixed in this order to give a coating solution having a solid content concentration of 18 wt%. (melamine series compound/ poly(vinyl alcohol) polymer was 60/40 weight ratio)

[Production of coated film]

PET having an intrinsic viscosity of 0.62 (30°C, phenol/tetrachloroethane=60/40) and silica (700 ppm) was precrystallized, dried regularly, extruded at 280°C using an extruder having a T-die and rapidly cooled for solidification on a drum (surface temperature 40°C) to give an amorphous sheet. The obtained sheet was stretched 4.0-fold in the longitudinal direction at 100°C between the heating roll and the cooling roll. On the other hand, the above-mentioned melamine series compound/poly(vinyl alcohol)-based polymer solution (solid content concentration 18 wt%) was fed into a temperature controlling tank connected with a fountain to discharge the solution to the film surface, and controlled to 25°C with stirring. A clean solution, from which foreign substance had been filtered off with a polypropylene capsule filter (30 μ pore), was coated on one side of the obtained uniaxially oriented film by placing a fountain on the surface under the condition of discharge rate of 0.028 m³/min. Thereafter, a flat and smooth bar with a diameter of 14 mm was placed on the surface of the solution, the coating solution was scraped off, and the solution was coated in such a manner that the coat thickness after stretching would be 0.15 μm. The coating rate (film forming speed) was 150 m/min. The rotational speed of the bar, which relates to the coating performance, was 60 rpm (2.6 m/min in circumference speed) in the same direction as the traveling direction of the film. Then, the film was led to a drying zone (tenter), and the solvent was evaporated and dried at a preheating temperature of 100°C, whereby the moisture content of the coating layer after drying was adjusted to 1.0 wt%. The film was transversely stretched 4.0-fold at 120°C and fixed by a heat treatment at 225°C while being relaxed 6% in the transverse direction. The treatment time at each temperature was 3 sec at a preheating temperature of 100°C, 5 sec at a stretching temperature of 120°C, and 8 sec at a heat fixation treatment temperature of 225°C. In addition, the wind speed of the heated air blown against the film at this time was 15 m/sec for each process of preheating, stretching and heat fixation. Variation in the wind speed was controlled to fall within ±0.5 m/sec by attaching an inverter to wind speed facility.

To achieve expression and uniformity of the gas barrier property, the emission rate in the drying zone was set to 480 m³/min based on the following formula.

$$\text{Thickness of coating layer } 0.20 \text{ (μm)} \times \text{amount of melamine in coating layer } 60(\%) \times \text{coefficient } 40 = \text{emission rate } 480 \text{ m}^3/\text{min}$$

Then, the film was cooled, and the both ends were cut and removed, thereby continuously forming a biaxially-oriented polyester film having a thickness of 12 μm for 1000 m or longer to give a mill roll. The obtained mill roll was slit in width 400 mm, and length 1000 m, and wound around a 3 inch paper tube to give a film roll having a coating layer of the present invention.

[Production of vapor-deposited film]

Using the film roll, various metals or metal oxides were vapor-deposited on the coated surface of the film.

a) Aluminum vapor deposition

Using particulate aluminum (about 8 - 10 mm, purity 99.9%) as a vapor deposition source, an aluminum thin film was formed on the coated surface of the film roll obtained as mentioned above by electron beam vapor deposition method. An electron beam gun (hereinafter to be referred to as EB gun) was used as a heat source and the emission current was set to 0.5 A. The film feed rate was set to 130 m/min and a 50 nm thick film was formed. In addition, the pressure during vapor deposition was adjusted to $1 \times 10^{-2}$ Pa. Furthermore, the temperature of the roll for cooling the film during vapor deposition was adjusted to -10°C.

b) Aluminum oxide vapor deposition

Using particulate $Al_2O_3$ (about 3 - 5 mm, purity 99.9%) as a vapor deposition source, an aluminum oxide thin film was formed on the coated surface of the film roll obtained as mentioned above by electron beam vapor deposition method. An EB gun was used as a heat source and the emission current was set to 1.3 A. The film feed rate was set to 130 m/min and a 20 nm thick film was formed. In addition, the pressure during vapor deposition was adjusted to $1 \times 10^{-2}$ Pa. Furthermore, the temperature of the roll for cooling the film during vapor deposition was adjusted to -10°C.

c) Silicon oxide vapor deposition

Using particulate Si (about 3 - 5 mm, purity 99.99%) and $SiO_2$ (purity 99.9%) as a vapor deposition source, a silicon oxide thin film was formed on the coated surface of the film roll obtained as mentioned above by electron beam vapor deposition method. The materials for vapor deposition were not mixed but fed in two portions. An EB gun was used as a heat source and each of Si and $SiO_2$ was heated in a time-sharing manner. The emission current of the EB gun at that time was set to 0.8 A, and each material was heated in such a manner that the composition ratio of Si and

SiO$_2$ would be 1:9. The film feed rate was set to 130 m/min and a 20 nm thick film was formed. In addition, the pressure during vapor deposition was adjusted to 1x10$^{-2}$ Pa. Furthermore, the temperature of the roll for cooling the film during vapor deposition was adjusted to -10°C.

d) Composite vapor deposition

Using particulate SiO$_2$ (about 3 - 5 mm, purity 99.99%) and Al$_2$O$_3$ (purity 99.9%) as a vapor deposition source, a composite thin film of aluminum oxide and silicon dioxide was formed on the coated surface of the film roll obtained as mentioned above by electron beam vapor deposition method. The materials for vapor deposition were not mixed but fed in two portions. An EB gun was used as a heat source and each of Al$_2$O$_3$ and SiO$_2$ was heated in a time-sharing manner. The emission current of the EB gun at that time was set to 1.2 A, and each material was heated in such a manner that the composition ratio of Al$_2$O$_3$ and SiO$_2$ would be 45:55. The film feed rate was set to 130 m/min and a 20 nm thick film was formed. In addition, the pressure during vapor deposition was adjusted to 1x10$^{-2}$ Pa. Furthermore, the temperature of the roll for cooling the film during vapor deposition was adjusted to -10°C.

These were subjected to the measurement of formaldehyde amount and total amount of lower alcohol in the coated film and vapor-deposited film, coat thickness of coated film, water contact angle, and oxygen permeability and moisture vapor permeability of vapor-deposited film, according to the method and conditions shown at the beginning of the Examples. The production conditions of the samples are shown in Table 1 and the evaluation results are shown in Table 2.

[Gelbo test]

For evaluation of the bending resistance, a gelbo treatment was applied for evaluation. As the sample, a polyurethane-based adhesive (manufactured by Toyo-Morton, Ltd., TM590/CAT56) was applied in about 3 $\mu$m to a vapor-deposited surface of a vapor-deposited film, and heat treated at 80°C, and a low density polyethylene film (manufactured by Toyobo Co., Ltd., L6102, thickness 40 $\mu$m) was dry laminated at a nip pressure of 490 kPa on a metal roll heated to 80°C to give a laminate film. The gelbo treatment was evaluated using a gelbo flex tester (manufactured by RIGAKU KOGYO, CO., LTD.). A 50-time twisting treatment was performed under the conditions of 20°C, 65% RH, and 50 times twisting/l min. The thus-produced samples after gelbo treatment and before gelbo treatment were measured for the oxygen permeability and moisture vapor permeability. The evaluation results are shown in Table 2.

(Experimental Examples 2 - 7, Comparative Examples 1 - 3, and Reference Examples 1 - 2)

The samples were prepared and evaluated by the steps similar to those of Examples 1 - 4 except that the composition (content of poly(vinyl alcohol) containing ethylene) of the poly(vinyl alcohol)-based polymer in the coating solution and the catalyst were changed as shown in Table 1. The evaluation results are shown in Table 2.

(Examples 8 - 11, Comparative Example 4, and Reference Examples 3 - 8)

The samples were prepared and evaluated by the steps similar to those of Example 1-d except that the emission rate/temperature of the drying zone, bar rotational direction, and moisture content of coating layer before stretching were changed as shown in Table 1. The evaluation results are shown in Table 2.

(Example 12)

The samples were prepared and evaluated by the steps similar to those of Example 1 except that the coating solution having a solid content concentration of 18 wt% was produced as shown below. The evaluation results are shown in Table 1.

[Production of coating solution]

While stirring water (39.6 kg), non-denatured poly(vinyl alcohol) polymer (degree of saponification 98.5 mol%, degree of polymerization 500, 4.86 kg), and hydroxyethylcellulose (0.54 kg) were gradually added. The mixture was heated to 90°C, and poly(vinyl alcohol) polymer was completely dissolved. Thereafter, the mixture was cooled to 25°C, and 12% aqueous solution of poly(vinyl alcohol) polymer was prepared. The aqueous poly(vinyl alcohol) polymer solution (45 kg), melamine series compound Cymel 327 (manufactured by Mitsui Cytec Co., 77% solution, 16.4 kg), water (31.6 kg), isopropyl alcohol (7.0 kg), 20% aqueous phosphoric acid solution (1.8 kg), 20% aqueous monoethanolamine solution (1.12 kg) (phosphoric acid was 2% relative to total solid content of poly(vinyl alcohol) polymer and melamine series compound, and monoethanolamine was 1/3 equivalent of phosphoric acid), and polyalkylene glycol-based surfactant (NOIGEN EA110, 0.018 kg, manufactured by DAI-ICHI KOGYO SEIYAKU CO., LTD., HLB11, 0.1% relative to coating layer) were mixed in this order to give a coating solution having a solid content concentration of 18 wt%. (melamine series compound/poly(vinyl alcohol) polymer was 60/40 weight ratio)

(Example 13)

The samples were prepared and evaluated by the steps similar to those of Example 1 except that the coating solution having a solid content concentration of 18 wt% was produced as shown below. The evaluation results are shown in Table 1.

[Production of coating solution]

While stirring water (39.6 kg), non-denatured poly(vinyl alcohol) polymer (degree of saponification 98.5 mol%, degree of polymerization 500, 4.86 kg), and poly(vinyl alcohol) polymer containing ethylene component (ethylene content 5 mol%, degree of saponification 98.5 mol%, degree of polymerization 500, 0.54 kg) were gradually added. The mixture was heated to 90°C, and poly(vinyl alcohol) polymer was completely dissolved. Thereafter, the mixture was cooled to 25°C, and 12% aqueous solution of poly(vinyl alcohol) polymer was prepared. The aqueous poly(vinyl alcohol) polymer solution (45 kg), melamine series compound Cymel 327 (manufactured by Mitsui Cytec Co., 77% solution, 16.4 kg), water (31.6 kg), isopropyl alcohol (7.0 kg), 20% aqueous magnesium chloride solution (1.8 kg), and polyalkylene glycol-based surfactant (NOIGEN EA110, 0.018 kg, manufactured by DAI-ICHI KOGYO SEIYAKU CO., LTD., HLB11, 0.1% relative to coating layer) were mixed in this order to give a coating solution having a solid content concentration of 18 wt%. (melamine series compound/poly(vinyl alcohol) polymer was 60/40 weight ratio)
[Table 1-1]

| | | | | | | catalyst | bar rotational direction (relative to film traveling direction) | drying zone (tenter) conditions and related properties | | | | | | vapor deposition conditions |
|---|---|---|---|---|---|---|---|---|---|---|---|---|---|---|
| | | | polymer component | | | | | | | | | | | |
| | | | non-denatured poly(vinyl alcohol) | compatible polymer | | | | preheating ture (°C) | moisture content (%) of coating layer before stretching | strech temperature (°C) | heat fixation temperature (°C) | emission rate (m3/min) | emission rate coefficient a | |
| | | | (wt%) | kind* | (wt%) | | | | | | | | | |
| Ex. | 1 | a | 90 | A | 10 | phosphoric acid/ mono-ethanolamine salt | same direction | 100 | 0.5 | 120 | 225 | 480 | 40 | aluminum vapor deposition |
| | | b | 90 | A | 10 | phosphoric acid/ mono-ethanolamine salt | same direction | 100 | 0.5 | 120 | 225 | 480 | 40 | aluminum oxide vapor deposition |
| | | c | 90 | A | 10 | phosphoric acid/ mono-ethanolamine salt | same direction | 100 | 0.5 | 120 | 225 | 480 | 40 | silicon oxide vapor deposition |
| | | d | 90 | A | 10 | phosphoric acid/ mono-ethanolamine salt | same direction | 100 | 0.5 | 120 | 225 | 480 | 40 | aluminum oxide/ silicon oxide composite vapor deposition |
| | 2 | | 50 | A | 50 | phosphoric acid/ mono-ethanolamine salt | same direction | 100 | 0.5 | 120 | 225 | 480 | 40 | aluminum oxide/ silicon oxide composite vapor deposition |

| | | polymer component | | | catalyst | bar rotational direction (relative to film traveling direction) | drying zone (tenter) conditions and related properties | | | | | | vapor deposition conditions |
| --- | --- | --- | --- | --- | --- | --- | --- | --- | --- | --- | --- | --- | --- |
| | | non-denatured poly(vinyl alcohol) | compatible polymer | | | | preheating ture (°C) | moisture content (%) of coating layer before stretching | strech temperature (°C) | heat fixation temperature (°C) | emission rate (m3/min) | emission rate coefficient a | |
| | | (wt%) | kind* | (wt%) | | | | | | | | | |
| | 3 | 99 | A | 1 | phosphoric acid/ monoethanol amine salt amine salt | same direction | 100 | 0.5 | 120 | 225 | 480 | 40 | aluminum oxide/ silicon oxide composite vapor deposition |
| | 4 | 10 | A | 90 | phosphoric acid/ monoethanol amine salt amine salt | same direction | 100 | 0.5 | 120 | 225 | 480 | 40 | aluminum oxide/ silicon oxide composite vapor deposition |
| | 5 | 90 | B | 10 | phosphoric acid/ monoethanol amine salt | same direction | 100 | 0.5 | 120 | 225 | 480 | 40 | aluminum oxide/ silicon oxide composite vapor deposition |
| | 6 | 90 | A | 10 | ammonium monohydrogen-phosphate salt | same direction | 100 | 0.5 | 120 | 225 | 480 | 40 | aluminum oxide/ silicon oxide composite vapor deposition |
| | 7 | 90 | A | 10 | dodecylbenzene-sulfonic acid ammonium salt | same direction | 100 | 0.5 | 120 | 225 | 480 | 40 | aluminum oxide/ silicon composite vapor deposition |
| | 8 | 90 | A | 10 | phosphoric acid/ monoethanol amine salt | same direction | 100 | 0.5 | 120 | 225 | 840 | 70 | aluminum oxide/ silicon oxide composite vapor deposition |

(continued)

| | | polymer component | | | catalyst | bar rotational direction (relative to film traveling direction) | drying zone (tenter) conditions and related properties | | | | | | vapor deposition conditions |
|---|---|---|---|---|---|---|---|---|---|---|---|---|---|
| | | non-denatured poly(vinyl alcohol) | compatible polymer | | | | preheating ture (°C) | moisture content (%) of coating layer before stretching | strech temperature (°C) | heat fixation temperature (°C) | emission rate (m3/min) | emission rate coefficient a | |
| | | (wt%) | kind* | (wt%) | | | | | | | | | |
| | 9 | 90 | A | 10 | phosphoric acid/mono-ethanolamine salt | same direction | 100 | 0.5 | 120 | 220 | 480 | 40 | aluminum oxide/silicon composite vapor deposition |
| | 10 | 90 | A | 10 | phosphoric acid/mono ethanolamine salt | same direction | 100 | 0.5 | 120 | 235 | 480 | 40 | aluminum oxide/silicon oxide composite vapor deposition |
| | 11 | 90 | A | 10 | phosphoric acid/mono-ethanolamine salt | same direction | 90 | 2.0 | 120 | 225 | 480 | 40 | aluminum oxide/silicon oxide composite vapor deposition |
| | 12 | 90 | C | 10 | phosphoric acid/mono-ethanolamine salt | same direction | 100 | 0.5 | 120 | 225 | 480 | 40 | aluminum oxide/silicon composite vapor deposition |
| | 13 | 90 | A | 10 | hydrochloric acid magnesium | same direction | 100 | 0.5 | 120 | 225 | 480 | 40 | aluminum oxide/silicon oxide composite vapor deposition |

* A: poly(vinyl alcohol) polymer containing ethylene component wherein the ethylene component content is 5 mol%
B: poly(vinyl alcohol) polymer containing ethylene component wherein the ethylene component content is 15 mol%
C: hydroxymethylcellulose

EP 1 886 809 A1

16

[Table 1-2]

| | | polymer component | | | catalyst | bar rotational direction (relative to film traveling direction) direction | drying zone (tenter) conditions and related properties | | | | | | vapor deposition conditions |
| | | non-denatured poly(vinyl alcohol) | compatible polymer | | | | preheatting temperature (°C) | moisture content (%) of coating of coating layer before stretching | stretch temperature (°C) | heat fixation temperature (°C) | emission rate (m3/min) | emission vapor rate coefficient a | |
| | | (wt%) | kind * | (wt%) | | | | | | | | | |
| Reference Example | 1 | 90 | B | 10 | phosphoric acid | Same direction | 100 | 0.5 | 120 | 225 | 480 | 40 | aluminum oxide/ silicon oxide composite vapor deposition |
| | 2 | 90 | B | 10 | dodecyl-benzene-sulfonic acid | same direction same direction | 100 | 0.5 | 120 | 225 | 480 | 40 | aluminum oxide/ silicon oxide composite vapor deposition |
| | 3 | 90 | A | 10 | phosphoric acid/mono-ethanolamine direction salt | opposite | 100 | 0.5 | 120 | 225 | 480 | 40 | aluminum oxide/ silicon oxide composite vapor deposition |
| | 4 | 90 | A | 10 | phosphoric acid/mono-ethanolamine salt | same direction | 110 | 0.3 | 120 | 225 | 480 | 40 | aluminum oxide/ silicon oxide composite vapor deposition |

| | | polymer component | | | catalyst | bar rotational direction (relative to film traveling direction) direction | drying zone (tenter) conditions and related properties | | | | | | vapor deposition conditions |
| | | non-denatured poly(vinyl alcohol) | compatible polymer | | | | preheatting temperature (°C) | moisture content (%) of coating of coating layer before stretching | stretch temperature (°C) | heat fixation temperature (°C) | emission rate (m3/min) | emission vapor rate coefficient a | |
| | | (wt%) | kind * | (wt%) | | | | | | | | | |
| | 5 | 90 | A | 10 | phosphoric acid/mono-ethanolamine salt | same direction | 100 | 0.5 | 120 | 218 | 480 | 40 | aluminum oxide/ silicon oxide composite vapor deposition |
| | 6 | 90 | A | 10 | phosphoric acid/mono-ethanolamine salt | same direction | 100 | 0.5 | 120 | 237 | 480 | 40 | aluminum oxide/ silicon oxide composite vapor deposition |
| | 7 | 90 | A | 10 | phosphoric acid/mono-ethanolamine salt | same direction | 100 | 0.5 | 120 | 225 | 420 | 35 | aluminum oxide/ silicon oxide composite vapor deposition |
| | 8 | 90 | A | 10 | phosphoric acid/mono-ethanolamine salt | same direction | 100 | 0.5 | 120 | 225 | 900 | 75 | aluminum oxide/ silicon oxide composite vapor deposition |

EP 1 886 809 A1

19

| | | | polymer component | | | | bar rotational direction (relative to film traveling direction) direction | drying zone (tenter) conditions and related properties | | | | | | |
| | | | non-denatured poly(vinyl alcohol) | compatible polymer | | catalyst | | preheatting temperature (°C) | moisture content (%) of coating of coating layer before stretching | stretch temperature (°C) | heat fixation temperature (°C) | emission rate (m3/min) | emission vapor rate coefficient a | vapor deposition conditions |
| | | | (wt%) | kind * | (wt%) | | | | | | | | | |
| Comparative Example | | a | 99.2 | A | 0.8 | phosphoric acid/mono-ethanolamine salt | same direction | 100 | 0.5 | 120 | 225 | 480 | 40 | aluminum vapor deposition |
| | 1 | b | 99.2 | A | 0.8 | phosphoric acid/mono-ethanolamine salt | same direction | 100 | 0.5 | 120 | 225 | 480 | 40 | aluminum oxide vapor deposition |
| | | c | 99.2 | A | 0.8 | phosphoric acid/mono-ethanolamine salt | same direction | 100 | 0.5 | 120 | 225 | 480 | 40 | silicon oxide vapor deposition |

EP 1 886 809 A1

| | | | polymer component | | | catalyst | bar rotational direction (relative to film traveling direction) direction | drying zone (tenter) conditions and related properties | | | | | | vapor deposition conditions |
| | | | non-denatured poly(vinyl alcohol) | compatible polymer | | | | preheatting temperature (°C) | moisture content (%) of coating of coating layer before stretching | stretch temperature (°C) | heat fixation temperature (°C) | emission rate (m3/min) | emission vapor rate coefficient a | |
| | | | (wt%) | kind * | (wt%) | | | | | | | | | |
| | | d | 99.2 | A | 0.8 | phosphoric acid/mono-ethanolamine salt | same direction | 100 | 0.5 | 120 | 225 | 480 | 40 | aluminum oxide/ silicon oxide composite vapor deposition |
| | 2 | | 100 | - | - | phosphoric acid/mono-ethanolamine salt | same direction | 100 | 0.5 | 120 | 225 | 480 | 40 | aluminum oxide/ silicon oxide composite vapor deposition |
| | 3 | | 90 | B | 10 | none | same direction | 100 | 0.5 | 120 | 225 | 480 | 40 | aluminum oxide/ silicon oxide composite vapor deposition |
| | 4 | | 90 | A | 10 | phosphoric acid/mono-ethanolamine salt | same direction | 85 | 2.2 | 120 | 225 | 480 | 40 | aluminum oxide/ silicon oxide composite vapor deposition |

* A: poly(vinyl alcohol) polymer containing ethylene component wherein the ethylene component content is 5 mol%
* B: poly(vinyl alcohol) polymer containing ethylene component wherein the ethylene component content is 15 mol%

[Table 2-1]

| | | | appearance of coating layer | property of coated film | | | | | |
| | | | | volatile component amount (ppm vs film) | | | | coat thickness | water contact angle |
| | | | | 130°C | | 200°C | | averager ($\mu$) | average (°) |
| | | | | formaldehyde | alcohol | formaldehyde | alcohol | | |
| Example | 1 | a | good | 40 | 25 | 90 | 90 | 0.15 | 35 |
| | | b | good | 40 | 30 | 90 | 90 | 0.15 | 35 |
| | | c | good | 35 | 30 | 80 | 90 | 0.15 | 35 |
| | | d | good | 30 | 20 | 90 | 90 | 0.15 | 35 |
| | 2 | | good | 30 | 15 | 90 | 90 | 0.15 | 36 |
| | 3 | | good | 40 | 25 | 80 | 75 | 0.16 | 35 |
| | 4 | | good | 30 | 20 | 85 | 80 | 0.14 | 36 |
| | 5 | | good | 25 | 15 | 80 | 80 | 0.16 | 35 |
| | 6 | | good | 30 | 20 | 85 | 80 | 0.15 | 35 |
| | 7 | | good | 30 | 20 | 80 | 80 | 0.14 | 36 |
| | 8 | | good | 30 | 15 | 80 | 75 | 0.17 | 35 |
| | 9 | | good | 30 | 20 | 80 | 80 | 0.15 | 35 |
| | 10 | | good | 30 | 15 | 80 | 75 | 0.14 | 35 |
| | 11 | | good | 35 | 20 | 85 | 80 | 0.15 | 35 |
| | 12 | | good | 30 | 20 | 90 | 90 | 0.15 | 35 |
| | 13 | | good | 35 | 20 | 95 | 90 | 0.15 | 35 |

(continued)

| | | | appearance of coating layer | property of coated film | | | | | |
|---|---|---|---|---|---|---|---|---|---|
| | | | | volatile component amount (ppm vs film) | | | | coat thickness | water contact angle |
| | | | | 130°C | | 200°C | | averager ($\mu$) | average (°) |
| | | | | formaldehyde | alcohol | formaldehyde | alcohol | | |
| Reference Example | | 1 | partial aggregate | 40 | 25 | 90 | 90 | 0.16 | 33 |
| | | 2 | partial aggregate | 40 | 25 | 90 | 90 | 0.15 | 34 |
| | | 3 | streak due to coating | 30 | 15 | 80 | 75 | 0.16 | 35 |
| | | 4 | crack due to stretching | 30 | 20 | 80 | 80 | 0.16 | 35 |
| | | 5 | good | 40 | 25 | 90 | 80 | 0.15 | 34 |
| | | 6 | good | 30 | 20 | 80 | 80 | 0.15 | 35 |
| | | 7 | good | 35 | 20 | 85 | 80 | 0.16 | 36 |
| | | 8 | good | 40 | 20 | 85 | 85 | 0.15 | 35 |
| Comparative Example | 1 | a | crack due to stretching | 70 | 80 | 170 | 170 | 0.15 | 35 |
| | | b | crack due to stretching | 80 | 80 | 185 | 180 | 0.15 | 35 |
| | | c | crack due to stretching | 80 | 80 | 190 | 185 | 0.15 | 35 |
| | | d | crack due to stretching | 70 | 80 | 180 | 180 | 0.15 | 35 |
| | 2 | | crack due to stretching | 200 | 150 | 390 | 320 | 0.16 | 35 |
| | 3 | | crack due to stretching | 150 | 170 | 340 | 330 | 0.15 | 36 |
| | 4 | | good | 100 | 110 | 200 | 195 | 0.15 | 31 |

【Table 2-2】

| | | property of vapor-deposited film | | | | | | | | | | | | note |
| | | volatile component amount | | | | gas barrier property | | effect of gelbo treatment on gas barrier property (bending resistance evaluation, laminate) | | | | | | |
| | | 130°C | | 200°C | | average oxygen permeability (ml/m2·day·MPa) | average moisture vapor permeability (g/m2·day) | oxygen permeability | | | moisture vapor permeability | | | |
| | | form-aldehyde | alcohol | form-aldehyde | alcohol | | | before gelbo (ml/m2·day·MPa) | after gelbo (ml/m2·day·MPa) | rate of degrada-tion by gelbo treatment | before gelbo (g/m2·day) | after gelbo (g/m2·day) | rate of degradation by gelbo treatment | |
| Ex. | 1 a | 35 | 25 | 80 | 80 | 9.4 | 1.27 | 9.1 | 9.7 | 0.07 | 0.48 | 0.52 | 0.08 | |
| | 1 b | 35 | 30 | 90 | 80 | 4.5 | 0.92 | 4.3 | 4.9 | 0.14 | 0.30 | 0.35 | 0.16 | |
| | 1 c | 35 | 25 | 80 | 90 | 6.4 | 1.37 | 6.3 | 6.7 | 0.06 | 0.52 | 0.56 | 0.07 | |
| | 1 d | 30 | 15 | 90 | 80 | 5.2 | 1.14 | 5.1 | 5.5 | 0.07 | 0.47 | 0.51 | 0.08 | |
| | 2 | 30 | 15 | 90 | 90 | 2.8 | 0.91 | 4.6 | 5.2 | 0.13 | 0.41 | 0.47 | 0.14 | |
| | 3 | 40 | 25 | 80 | 70 | 7.2 | 1.41 | 2.6 | 2.9 | 0.13 | 0.31 | 0.35 | 0.14 | |
| | 4 | 25 | 15 | 80 | 80 | 3.4 | 0.90 | 3.3 | 3.8 | 0.14 | 0.30 | 0.34 | 0.13 | |
| | 5 | 20 | 10 | 80 | 75 | 3.0 | 0.90 | 2.9 | 3.3 | 0.14 | 0.31 | 0.35 | 0.13 | |
| | 6 | 30 | 15 | 85 | 80 | 3.8 | 1.00 | 3.6 | 4.0 | 0.10 | 0.39 | 0.43 | 0.11 | |
| | 7 | 30 | 20 | 80 | 80 | 4.2 | 0.99 | 4.0 | 4.3 | 0.08 | 0.40 | 0.44 | 0.09 | |
| | 8 | 25 | 15 | 75 | 70 | 2.8 | 0.88 | 2.7 | 3.1 | 0.14 | 0.30 | 0.34 | 0.14 | |
| | 9 | 25 | 15 | 80 | 75 | 3.6 | 0.98 | 3.5 | 4.0 | 0.14 | 0.39 | 0.44 | 0.14 | |
| | 10 | 30 | 15 | 80 | 75 | 3.0 | 0.89 | 2.9 | 3.3 | 0.15 | 0.31 | 0.36 | 0.16 | |
| | 11 | 35 | 20 | 85 | 75 | 4.2 | 1.11 | 4.1 | 4.5 | 0.10 | 0.45 | 0.49 | 0.09 | |
| | 12 | 35 | 20 | 90 | 80 | 5.8 | 1.20 | 5.7 | 6.1 | 0.07 | 0.47 | 0.52 | 0.08 | |
| | 13 | 35 | 25 | 90 | 80 | 6.5 | 1.41 | 6.5 | 6.9 | 0.07 | 0.50 | 0.55 | 0.08 | |

EP 1 886 809 A1

【Table 2-3】

| | | property of vapor-deposited film | | | | | | | | | | | | note |
|---|---|---|---|---|---|---|---|---|---|---|---|---|---|---|
| | | volatile component amount | | | | gas barrier property | | effect of gelbo treatment on gas barrier property (bending resistance evaluation, laminate) | | | | | | |
| | | 130°C | | 200°C | | average oxygen permeability (ml/m2·day·MPa) | average moisture vapor permeability (g/m2·day) | oxygen permeability | | | moisture vapor permeability | | | |
| | | form-aldehyde | alcohol | form-aldehyde | alcohol | | | before gelbo (ml/m2·day·MPa) | after gelbo (ml/m2·day·MPa) | rate of degrada-tion by gelbo treatment | before gelbo (g/m2·day) | after gelbo (g/m2·day) | rate of degrada-tion by gelbo treatment | |
| Reference Example | 1 | 35 | 25 | 90 | 85 | 5.2 | 1.18 | 5.0 | 5.8 | 0.15 | 0.50 | 0.57 | 0.14 | |
| | 2 | 35 | 20 | 85 | 85 | 4.9 | 1.07 | 4.7 | 5.4 | 0.14 | 0.49 | 0.55 | 0.13 | |
| | 3 | 25 | 15 | 75 | 70 | 5.4 | 1.13 | 5.3 | 6.1 | 0.16 | 0.50 | 0.58 | 0.15 | |
| | 4 | 30 | 15 | 75 | 75 | 12.6 | 2.87 | 12.1 | 14.9 | 0.23 | 1.20 | 1.49 | 0.24 | |
| | 5 | 35 | 20 | 85 | 75 | 5.4 | 1.23 | 5.2 | 6.0 | 0.15 | 0.52 | 0.60 | 0.16 | |
| | 6 | 25 | 15 | 75 | 75 | 2.9 | 0.85 | 2.8 | 3.2 | 0.14 | 0.29 | 0.34 | 0.16 | decreased strength of base film |
| | 7 | 35 | 15 | 85 | 80 | 5.3 | 1.21 | 5.1 | 5.8 | 0.14 | 0.50 | 0.58 | 0.15 | |
| | 8 | 40 | 15 | 85 | 80 | 3.0 | 0.84 | 3.2 | 3.6 | 0.14 | 0.30 | 0.35 | 0.15 | |
| Comparative Example | 1 a | 60 | 70 | 160 | 155 | 17.4 | 3.54 | 16.5 | 20.0 | 0.21 | 1.44 | 1.73 | 0.21 | |
| | 1 b | 80 | 75 | 175 | 170 | 10.5 | 2.08 | 10.0 | 12.8 | 0.28 | 0.70 | 0.91 | 0.30 | |
| | 1 c | 80 | 75 | 180 | 180 | 15.2 | 2.92 | 14.6 | 17.8 | 0.22 | 1.24 | 1.53 | 0.23 | |
| | 1 d | 65 | 75 | 165 | 160 | 12.2 | 2.37 | 11.7 | 14.3 | 0.22 | 0.90 | 1.12 | 0.24 | |
| | 2 | 180 | 145 | 370 | 305 | 17.3 | 3.51 | 16.5 | 20.6 | 0.25 | 1.34 | 1.74 | 0.30 | |
| | 3 | 140 | 160 | 330 | 315 | 12.3 | 2.45 | 11.8 | 14.9 | 0.26 | 0.91 | 1.16 | 0.28 | |
| | 4 | 95 | 105 | 190 | 185 | 13.0 | 3.80 | 12.5 | 15.6 | 0.25 | 1.60 | 1.97 | 0.23 | |

**Industrial Applicability**

According to the present invention, a film extremely superior in the oxygen barrier property and moisture vapor barrier property, superior in the uniformity of the barrier properties and bending resistance, free of dioxin, and hydrogen chloride gas in the incineration exhaust gas, and effective for environmental conservation can be provided economically.

**Claims**

1. A coated film having a thickness of 5 - 50 μm, wherein a coating layer comprising a melamine series compound and a poly(vinyl alcohol)-based polymer as essential components is laminated on a substrate made of a polymer resin composition, and the weight of formaldehyde and the weight of alcohol developed from the coated film when heated at 130°C is each not more than 50 ppm of the weight of a sample of the coated film.

2. A vapor-deposited film wherein an inorganic thin film layer is vapor-deposited on the coating layer of the coated film of claim 1.

3. The vapor-deposited film of claim 2, which shows, when the vapor-deposited film is subjected to a gelbo test, the oxygen permeability and moisture vapor permeability before and after the gelbo test satisfy the following formula 1):

```
formula 1) (permeability after gelbo test - permeability
before gelbo test)/permeability before gelbo test≤0.2.
```

## INTERNATIONAL SEARCH REPORT

| | International application No. |
|---|---|
| | PCT/JP2006/309226 |

A. CLASSIFICATION OF SUBJECT MATTER
*B32B27/30* (2006.01)i

According to International Patent Classification (IPC) or to both national classification and IPC

B. FIELDS SEARCHED

Minimum documentation searched (classification system followed by classification symbols)
B32B27/30, C08J7/04

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPIL

C. DOCUMENTS CONSIDERED TO BE RELEVANT

| Category* | Citation of document, with indication, where appropriate, of the relevant passages | Relevant to claim No. |
|---|---|---|
| X<br>Y | JP 56-163 A (Toyobo Co., Ltd.),<br>06 January, 1981 (06.01.81),<br>Claims; page 4, upper left column, the last<br>line, lower right column, lines 13 to 14<br>(Family: none) | 1<br>2,3 |
| X<br>Y | JP 55-124652 A (Toyobo Co., Ltd.),<br>25 September, 1980 (25.09.80),<br>Claims; page 3, lower right column, line 7;<br>page 4, upper right column, line 11<br>(Family: none) | 1<br>2,3 |
| Y | JP 2002-166489 A (Toyobo Co., Ltd.),<br>11 June, 2002 (11.06.02),<br>Prior Art<br>(Family: none) | 2,3 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 July, 2006 (24.07.06) | 01 August, 2006 (01.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 886 809 A1**

## REFERENCES CITED IN THE DESCRIPTION

### Patent documents cited in the description

- JP 62295931 A